# EUROPEAN PATENT SPECIFICATION

(11) **EP 2 830 122 B1**
(45) Date of publication and mention of the grant of the patent: **24.02.2016**
(21) Application number: 13764826.7
(22) Date of filing: 25.02.2013
(51) Int. Cl.: H01M 2/10, B29C 45/26, H01M 2/34

(54) **CELL PACK, DEVICE AND METHOD FOR MANUFACTURING CELL PACK**
ZELLENPAKET SOWIE VORRICHTUNG UND VERFAHREN ZUR HERSTELLUNG DES ZELLENPAKETS
BLOC DE PILES, DISPOSITIF ET PROCÉDÉ DE FABRICATION DE BLOC DE PILES

(30) Priority: 21.03.2012 JP 2012064595
(43) Date of publication of application: 28.01.2015
(73) Proprietor: Sanyo Electric Co., Ltd., Osaka 574-8534 (JP)
(72) Inventor: YONEDA Haruhiko, Osaka-shi, Osaka 540-6207 (JP); YAMAGAMI Sadao, Osaka-shi, Osaka 540-6207 (JP); HAINO Masami, Osaka-shi, Osaka 540-6207 (JP); KOUTARI Masato, Osaka-shi, Osaka 540-6207 (JP)
(74) Representative: Grünecker Patent- und Rechtsanwälte PartG mbB
(86) International application number: PCT/JP2013/054732
(87) International publication number: WO 2013/140951

(56) References cited:
- EP-A1- 2 421 070
- JP-A- H05 278 081
- JP-A- H06 223 794
- JP-A- 2007 305 408
- JP-A- 2010 277 795
- JP-A- 2010 277 796
- JP-A- 2011 171 125
- JP-A- 2011 216 366
- JP-A- 2011 253 641
- US-A1- 2010 047 682

## Description

### TECHNICAL FIELD

The present invention is related to a battery pack which stores plural battery cells, and a manufacturing apparatus and a manufacturing method of the battery pack.

### BACKGROUND ART

A battery pack which stores plural battery cells is used as a power source of an assist bicycle, a power tool, or the like. The battery pack in a state of fixing the plural battery cells to a battery holder is inserted into an outer case. The battery holder has storage space to store the battery cells. When a cylindrical battery cell is used, the battery holder fixes holding tubes of tubular shapes mutually in parallel to individually store the battery cells.

The battery pack enables to change an output current by the number of the battery cells connected in parallel, and an output voltage by the number of the battery cells connected in series (for example, patent literature 1, 2). In such battery pack, the output current or the output voltage is determined corresponding to the application to be used or the specification of an electrical equipment to be driven, and based on this, the number of the battery cells for usage or a connection state in series or parallel is appropriately determined. In other words, the output voltage or the number of the battery cells for usage is different corresponding to the application to be used.

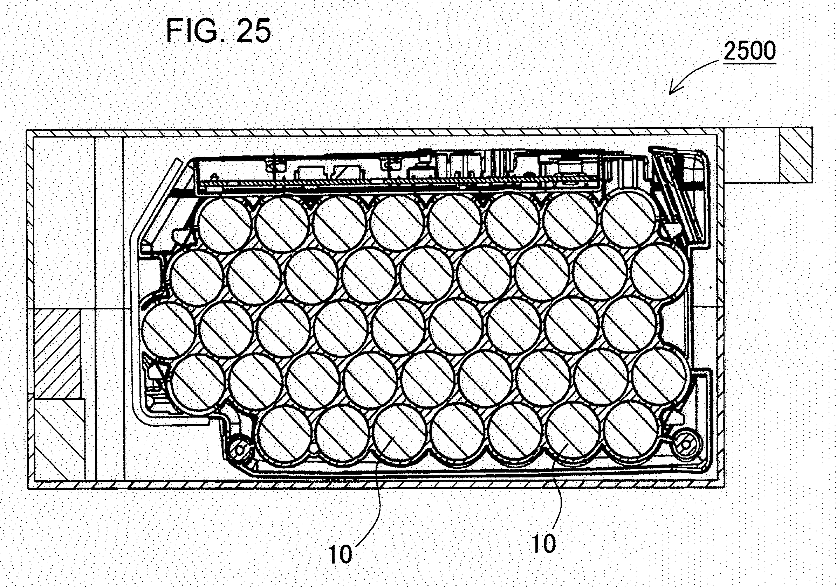

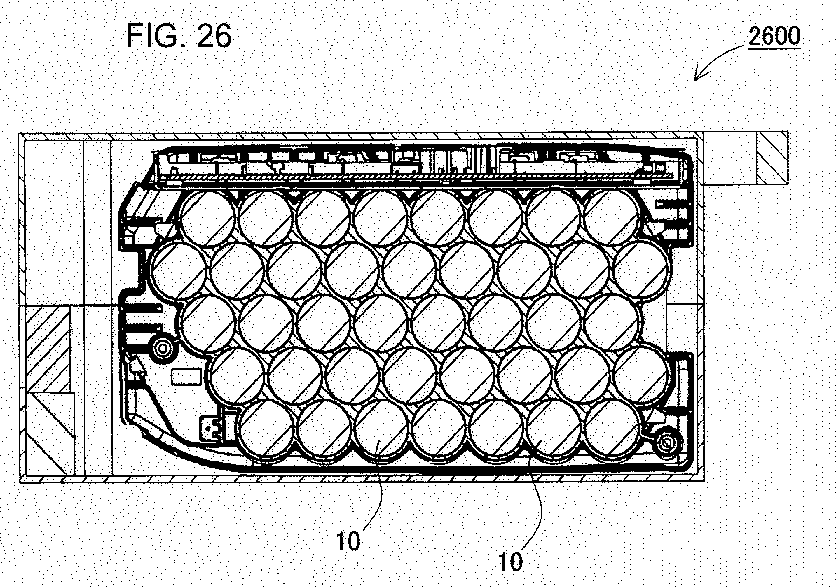

On the other hand, from a view point of a reduction of manufacturing cost or a easiness of management, the outer case of the battery pack is used in common parts utilization, or in the same outer shape. Especially from a view point of cost reduction, when the numbers of the battery cells in different battery pack are close, the battery holders are individually designed, but the outer case storing this is used in common parts utilization, and then cost reduction is carried out by using the same mold by which the outer case is molded. For example, in the battery pack 2500 shown in sectional view of FIG. 25, seven pieces of the battery cells 10 are connected in series, and six units of those series units are connected in parallel, and then the total forty two pieces of the battery cell are used. On the other hand, in the battery pack 2600 shown in a sectional view of FIG. 26, ten pieces of the battery cells 10 are connected in series, and four units of those series units are connected in parallel, and then the total forty pieces of the battery cell are used. Further, a battery holder which is not shown in figures has, for example, forty two of the holding tubes, but as two of the empty holding tubes, in forty pieces of the battery cells, ten pieces are connected in series, and four units of those series units are connected in parallel. Thus, even though the battery holders store close numbers of the battery cells, by making outer shapes of the battery holders similar or the same, the outer case is used in common parts utilization.

However, in case that the outer cases of the battery packs are the same, at the time of assembling the battery packs, it is considered that the battery holders which are stored inside are mistaken. When the different type battery holder from the correct one is stored in the outer case, as the voltage specification is different, the electric equipment connected to the battery pack does not operate, or is not correctly driven.

In order to prevent such mistake, for example, it is considered that by having the projection of rib on the inner surface of the outer case, the outer case cannot be assembled such that the projection of rib interferes when an attempt is made to insert a wrong battery holder into the outer case. However, in this case, as it is necessary that the outer cases are individually designed, and in order to mold each outer case, the exclusive molds are individually needed, and then there is a problem to increase a manufacturing cost.

### Citation List

### Patent Literature

Patent Literature 1:
   Japanese Laid-Open Patent Publication No. 2008-177156
Patent Literature 2:
   Japanese Laid-Open Patent Publication No. 2002-208388

### SUMMARY OF THE INVENTION

The present disclosure is developed for the purpose of solving such drawbacks. One non-limiting and explanatory embodiment provides a battery pack, and a manufacturing apparatus and a manufacturing method of the battery pack which make it possible to avoid mistakes or mix-ups of a battery holder housed in an outer case such that the battery pack can be assembled correctly.

A battery pack of a first aspect of the present disclosure comprises an outer case and a battery holder holding plural battery cells, and the outer case is provided with a case side rib protruding from a first position on an inner surface thereof, and the battery holder is provided with a holder side projection protruding from a second position on an outer surface, and the battery holder is configured so that the second position, at which the holder side projection is provided, is located at a different position to that for a battery holder of a different type, and the first and second positions are disposed at positions at which the case side rib does not interfere with the holder side projection when the battery holder is inserted into the outer case , and the case side rib interferes with the holder side projection when an attempt is made to insert the battery holder of a different type into the outer case , and the first and second positions are disposed in symmetric positions on a predetermined axis of symmetry.

Accordingly, when a combination of the outer case and the battery holder is not correct, by the case side rib interfering the holder side projection, assembling of incorrect combination in the assembling process is prevented. Especially, for example, when the outer case is molded by the mold, the mold including the mold insert is configured, and the mold insert is inverted, and then the first position and the second position are easily exchanged. According to this structure, the mold for molding the case side rib is commonly used as common parts utilization. Moreover, as the mold insert is relatively large, the problem to be lost is reduced.

In the battery pack of a second aspect of the present disclosure, the outer case comprises a first case and a second case, and when a combination of the outer case and the battery holder is not correct, the case side rib interferes with the holder side projection so that the first case and the second case are not assembled.

Accordingly, when a combination of the outer case and the battery holder is not correct, as the first case and the second case are not assembled, and by not physically assembling the outer case, assembling of incorrect combination is surely prevented.

The battery pack of a third aspect of the present disclosure, further comprises a waterproof cover covering the battery holder, and in the case side rib, plural ribs are formed in spaced relationship with each other.

Accordingly, when the top end of the case side rib contacts the cover, as the pressure is decreased, it prevents damage of the cover.

In the battery pack of a fourth aspect of the present disclosure, in the plural ribs, the central rib thereof projects higher than the other ribs.

Accordingly, as the projecting size is gradually changed from the right and left, the pressure by the top end of the case side rib toward the cover is decreased, it is prevented that the cover is damaged by the top end of the rib.

In the battery pack of a fifth aspect of the present disclosure, a mold insert side carved seal of character information related to the first position is formed at the periphery of the case side rib on the inner surface of the outer case.

Accordingly, by the mold insert side carved seal, where the first position is provided, or the types of the outer case are visually identified.

In the battery pack of a sixth aspect of the present disclosure, a main mold side carved seal is formed at the periphery of the case side rib on the inner surface of the outer case, and is connected to the mold insert side carved seal, and an information of a type of the outer case is shown.

Accordingly, by the position of the mold insert, the mold insert side carved seal and the main mold side carved seal constitute the information showing a type of the outer case, and then the types of the outer case are visually identified.

In the battery pack of a seventh aspect of the present disclosure, the outer case is molded by a mold, and the mold comprises a main mold and a mold insert which is enable to be inserted into the main mold, and the mold insert is to mold the case side rib, and by changing the mold insert, the first position is changed to a position.

Accordingly, the main mold for molding the outer case is commonly used as common parts utilization, and by changing the mold insert, the position of the case side rib can be changed, and then cost of the mold is largely reduced.

In the battery pack of a eighth aspect of the present disclosure, the mold insert is made in a symmetric shape on a predetermined axis of symmetry, and by inserting the mold insert into the main mold in a state of inverting the mold insert, the first position is changed to a position corresponding to the second position.

Accordingly, by inverting the mold insert, the first position is easily changed In the battery pack of a ninth aspect of the present disclosure, the mold insert side carved seal showing the character information related to the first position is marked on the outer case by the mold insert, and the main mold side carved seal is made next to a position at which the mold insert side carved seal is made at the periphery of the mold insert by the main mold, and the main mold side carved seal is connected to the mold insert side carved seal, and an information of a type of the outer case is shown.

Accordingly, by the position of the mold insert, the mold insert side carved seal and the main mold side carved seal constitute the information showing a type of the outer case, and the types of the outer case are visually identified.

In the battery pack of a tenth aspect of the present disclosure, the main mold side carved seal comprises plural pieces of different contents at different positions, and by inverting the mold insert, a position of the mold insert side carved seal is changed, and at the changed position, the mold insert side carved seal is connected to one piece of the main mold side carved seal, and an information of a type of the outer case is shown.

Accordingly, by the position of the mold insert, the mold insert side carved seal and the main mold side carved seal constitute the information showing a type of the outer case, and the types of the outer case are visually identified.

In the battery pack of a eleventh aspect of the present disclosure, the mold insert side carved seal is marked on the same surface as the case side rib.

Accordingly, by showing the mold insert side carved seal on the inner surface of the outer case, at the time of assembling, from the mold insert side carved seal, the combination of the outer case and the battery holder is confirmed. Further, the mold insert side carved seal is not exposed outside after the assembling, and then it does not influence the outer appearance.

A manufacturing apparatus of a twelfth of the present disclosure of a battery pack which includes an outer case, and a battery holder holding plural battery cells, comprises a main mold molding the outer case and a mold insert being enable to inserted into the main mold, and having a profile for rib which projects from an inner surface of the outer case and is located at a first position, and the first position is adjusted so as not to interfere with a second position at which a holder side projection projecting from the outer surface of the battery holder is provided, and in different types of the battery holders the second positions are changed in different positions each other, and by changing the mold insert, a first position is changed, and a second position of a battery holder corresponding to the outer case molded by the mold insert does not interfere with the first position, and the first position is adjusted such that the second position of the battery holder not corresponding to the outer case interferes with the first position.

Accordingly, by showing the mold insert side carved seal on the inner surface of the outer case, at the time of assembling, from the mold insert side carved seal, the combination of the outer case and the battery holder is confirmed. Further, the mold insert side carved seal is not exposed outside after the assembling, and then it does not influence the outer appearance.

In the manufacturing apparatus of a thirteen of the present disclosure, the mold insert has a profile for a mold insert side carved seal so as to mark the mold insert side carved seal showing character information related to the first position at the periphery of the case side rib on the inner surface of the outer case.

Accordingly, by the mold insert side carved seal, where the first position is provided, or the types of the outer case are visually identified.

In the manufacturing apparatus of a fourteen of the present disclosure, the main mold has a profile for a main mold side carved seal to mark the main mold side carved seal, and by inverting the mold insert, the position of the mold insert side carved seal is changed, and the main mold side carved seal is connected to the mold insert side carved seal, and an information of a type of the outer case is shown.

Accordingly, by the position of the mold insert, the mold insert side carved seal and the main mold side carved seal constitute the information showing a type of the outer case, and then the types of the outer case are visually identified.

In the manufacturing apparatus of a fifteen of the present disclosure, the main mold side carved seal comprises plural pieces of different contents at different positions, and by inverting the mold insert, a position of the mold insert side carved seal is changed, and at the changed position, the mold insert side carved seal is connected to one piece of the main mold side carved seal, and an information of a type of the outer case is shown.

Accordingly, by the position of the mold insert, the mold insert side carved seal and the main mold side carved seal constitute the information showing a type of the outer case, and then the types of the outer case are visually identified.

In the manufacturing apparatus of a sixteen of the present disclosure, the mold insert side carved seal is marked on the same surface as the case side rib.

Accordingly, by showing the mold insert side carved seal on the inner surface of the outer case, at the time of assembling, from the mold insert side carved seal, the combination of the outer case and the battery holder is confirmed. Further, the mold insert side carved seal is not exposed outside after the assembling, and then it does not influence the outer appearance.

A manufacturing method of a seventeen of the present disclosure of a battery pack which includes an outer case, and a battery holder holding plural battery cells, comprises selecting and inserting a mold insert to enable to be inserted into a main mold which molds the outer case, and inserting this, forming a case side rib which projects from the inner surface of the outer case and is located at a first position by the main mold into which the mold insert is inserted at the time of molding the outer case, forming a holder side projection projecting from the outer surface of the battery holder at a second position at the time of molding the battery holder to enable to be stored in the outer case, and storing the battery holder in the outer case, and the first position is adjusted such that the second position of the battery holder interferes with the first position, and in different types of the battery holders the second positions are changed in different positions each other
by changing the mold insert, a first position is changed, and a second position of a battery holder corresponding to an outer case molded by the mold insert does not interfere with the first position, and the first position is adjusted such that the second position of the battery holder not corresponding to the outer case interferes with the first position.

In the manufacturing method of a eighteen of the present disclosure, the mold insert has a profile for the mold insert side carved seal to mark the mold insert side carved seal showing the character information related to the first position.

In the manufacturing method of a nineteen of the present disclosure, the main mold has a profile for the main mold side carved seal to mark the main mold side carved seal, and by inverting the mold insert, the position of the mold insert side carved seal is changed, and the main mold side carved seal is connected to the mold insert side carved seal, and an information of a type of the outer case is shown.

In the manufacturing method of a twentieth of the present disclosure, the main mold side carved seal comprises plural pieces of different contents at different positions, and by inverting the mold insert, a position of the mold insert side carved seal is changed, and at the changed position, the mold insert side carved seal is connected to one piece of the main mold side carved seal, and an information of a type of the outer case is shown.

In the manufacturing method of a twenty first of the present disclosure, the mold insert side carved seal is marked on the same surface as the case side rib.

### BRIEF DESCRIPTION OF DRAWINGS

FIG. 1 is an external appearance perspective view of a battery pack of according to an embodiment 1.
FIG. 2 is an external appearance perspective view from the rear diagonally lower side of the battery pack of FIG.1.
FIG. 3 is an exploded perspective view of the battery pack of FIG.1.

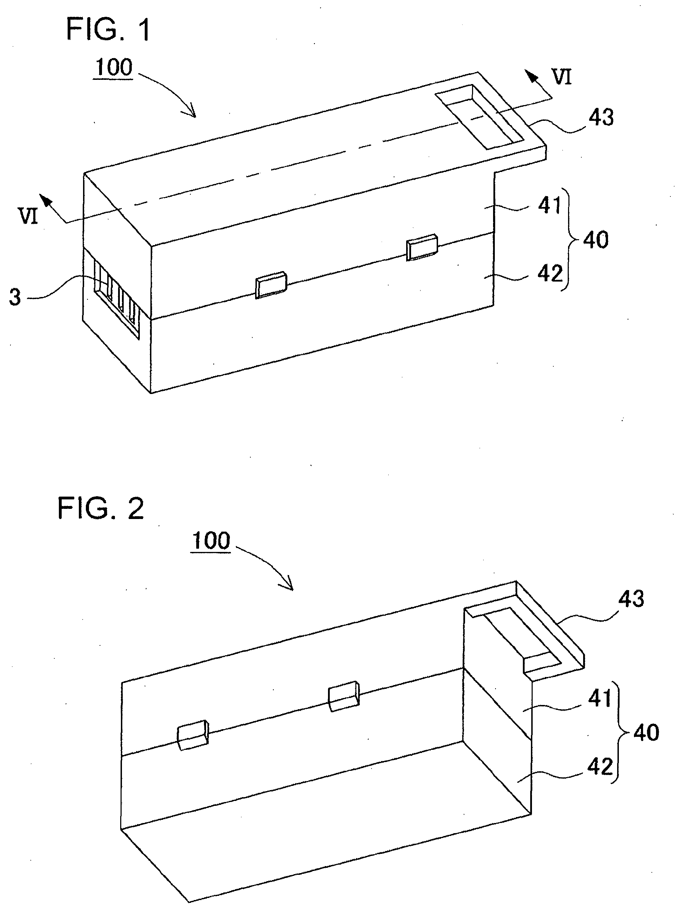

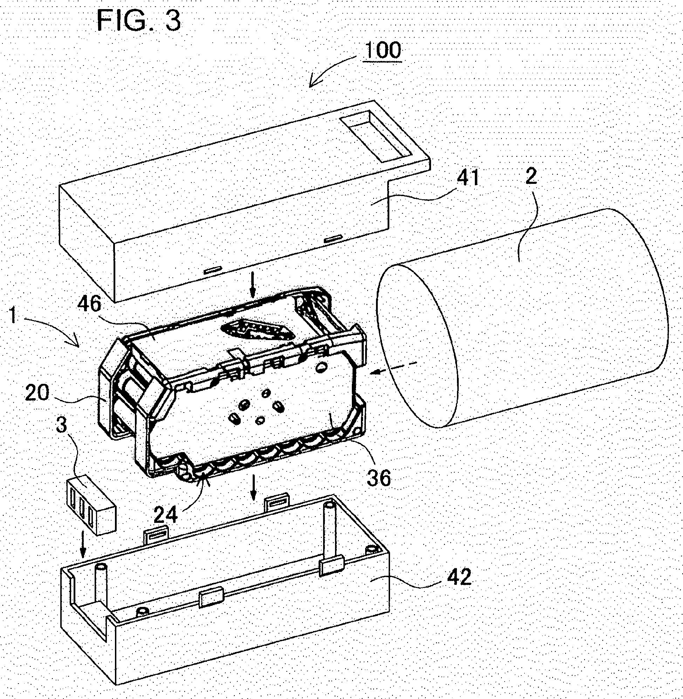

FIG. 3 is an exploded perspective view of the battery pack of FIG.1.

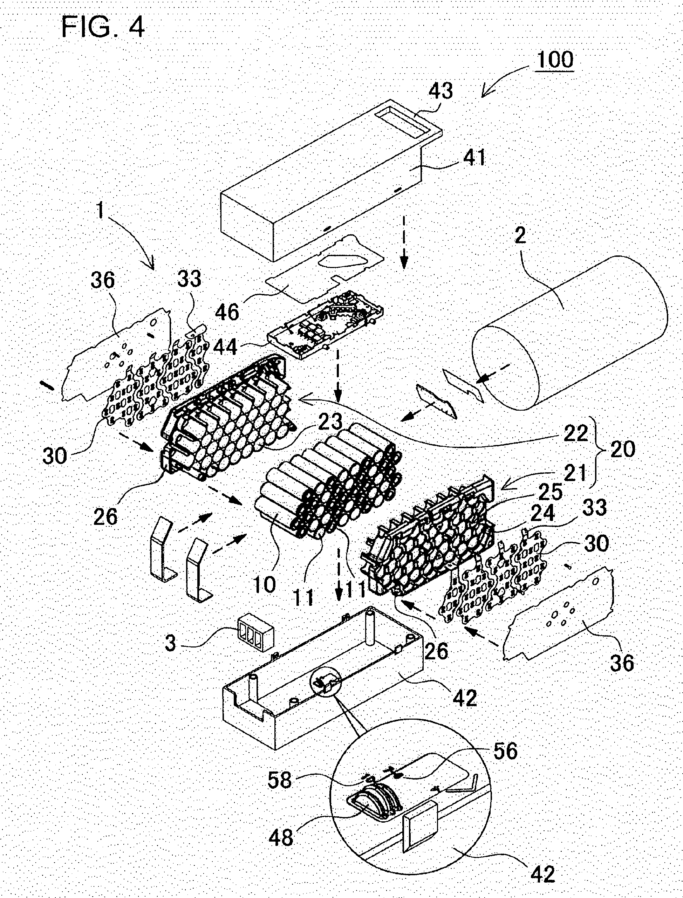

FIG. 4 is an exploded perspective view and of a battery block from FIG.3.

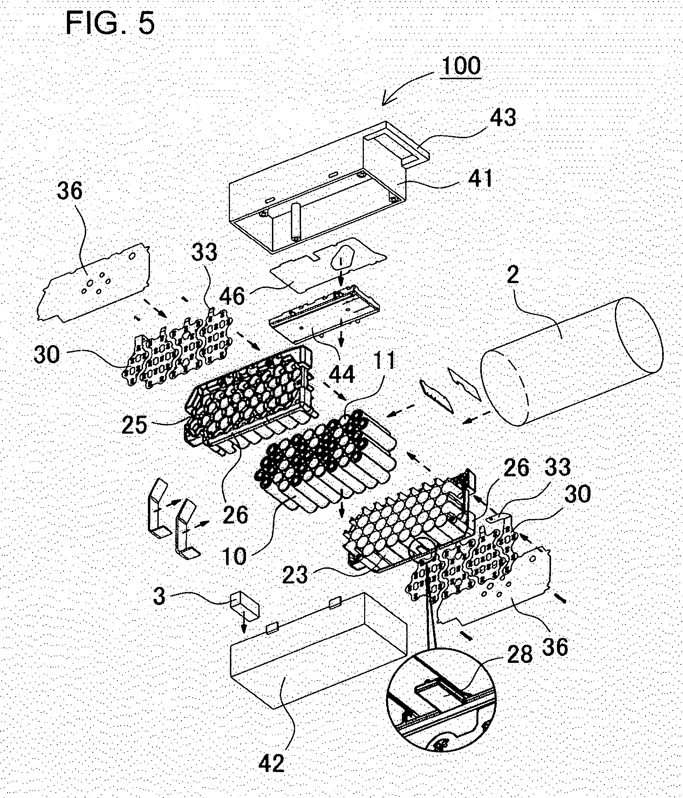

FIG. 5 is an exploded perspective view and an enlarged view from the rear diagonally lower side of the battery pack of FIG.4.

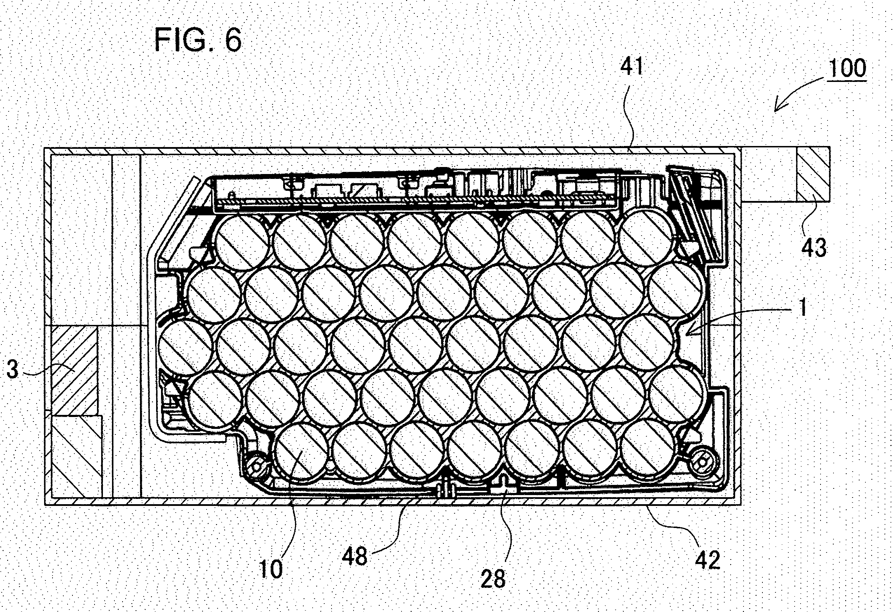

FIG. 6 is a sectional view along a line VI-VI in FIG. 1.

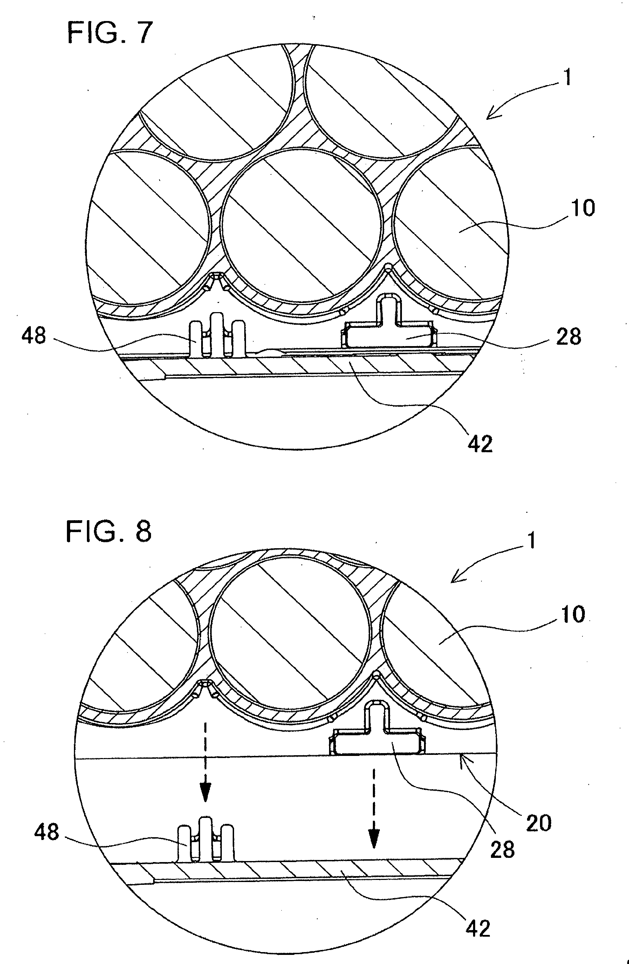

FIG. 7 is a enlarged view of a circled portion of FIG. 6.
FIG. 8 is an enlarged sectional view in a state of the battery block being inserted into a lower case.

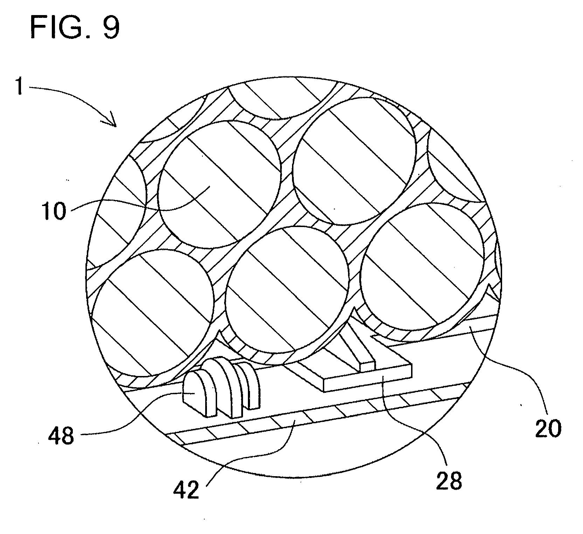

FIG. 9 is a perspective view of FIG. 7.

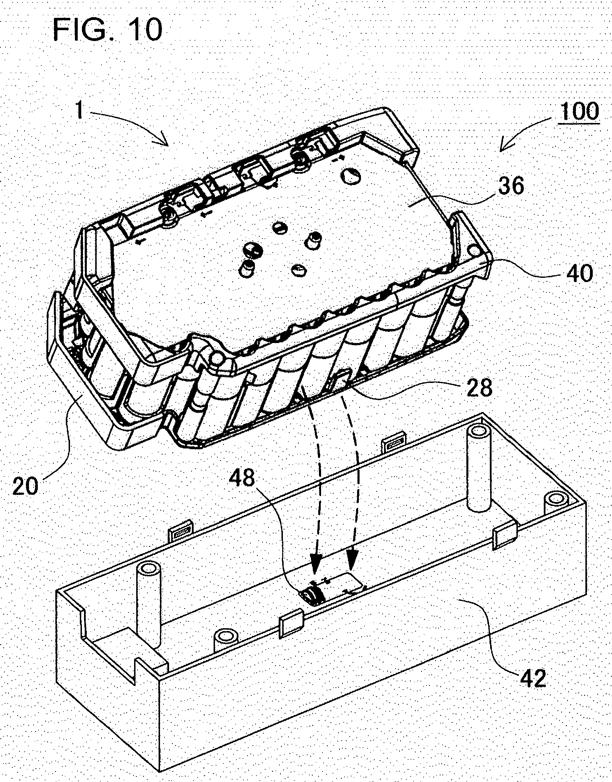

FIG. 10 is a perspective view at a posture of tilting the batter block so as to show the bottom surface in the state of the battery block being inserted into the lower case.

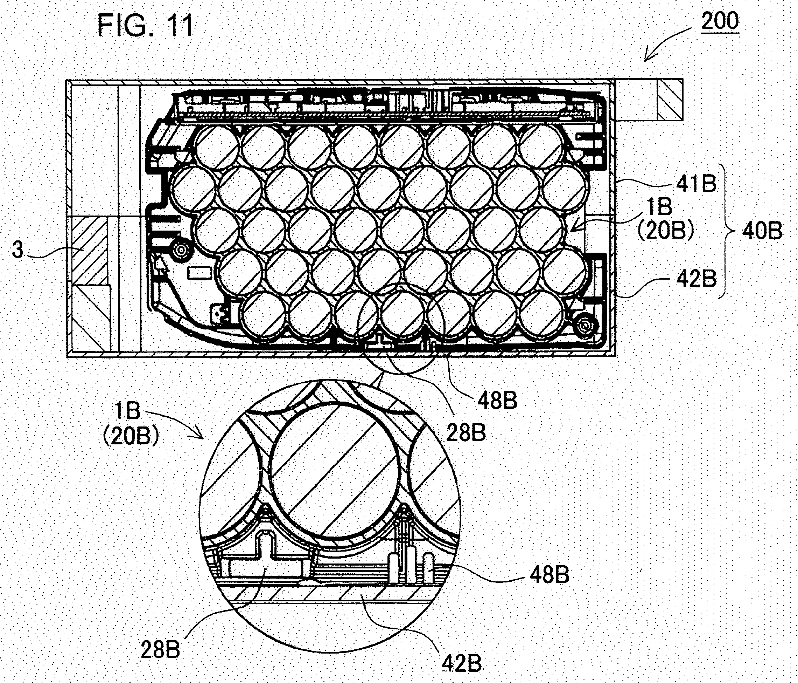

FIG. 11 is a sectional view and a partial enlarged view of a battery pack according to an embodiment 2.

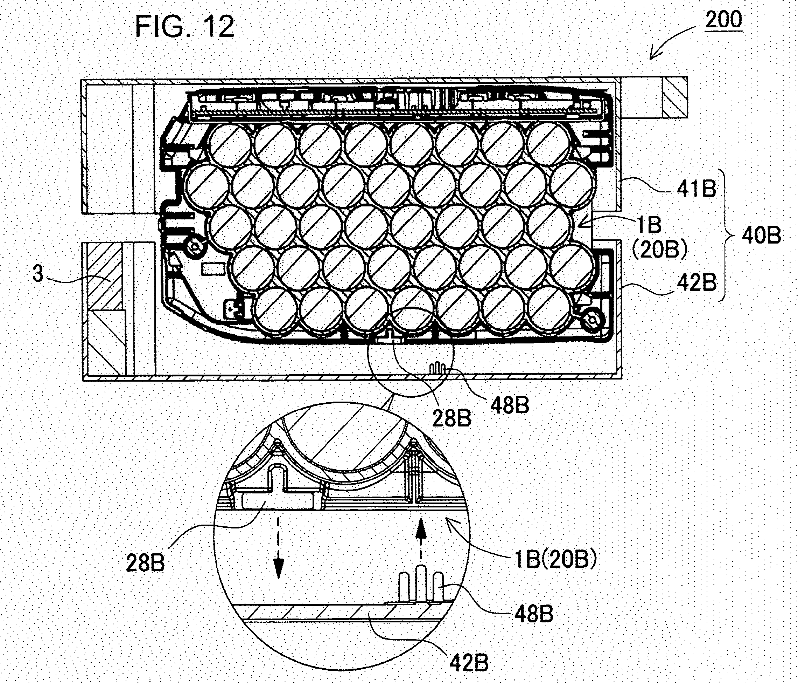

FIG. 12 is an exploded sectional view in a state in which the lower case of FIG. 11 is disassembled from the battery block.

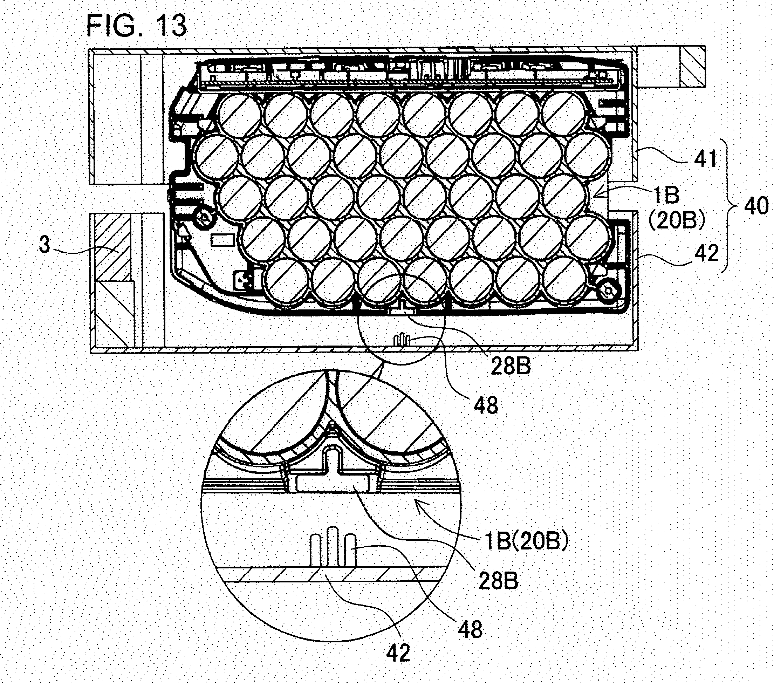

FIG. 13 is a sectional view in a state in which the battery block of the embodiment 2 is inserted into the outer case of the embodiment 1.

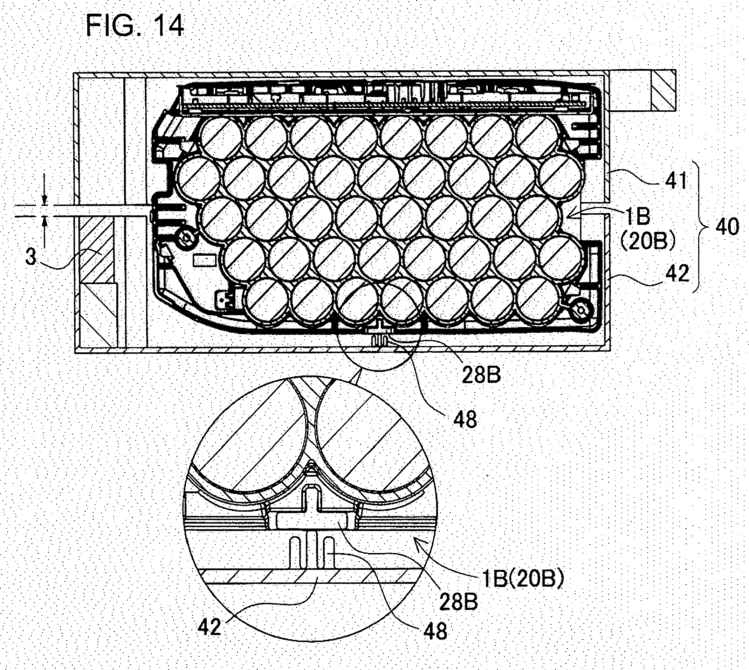

FIG. 14 is a sectional view and a partially enlarged view in a state in which a case side rib interferes with a holder side projection from the state of FIG. 13.

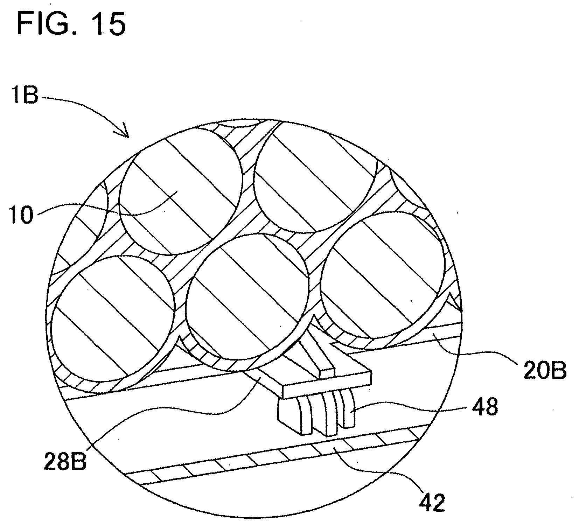

FIG. 15 is an enlarged perspective view of FIG. 14.

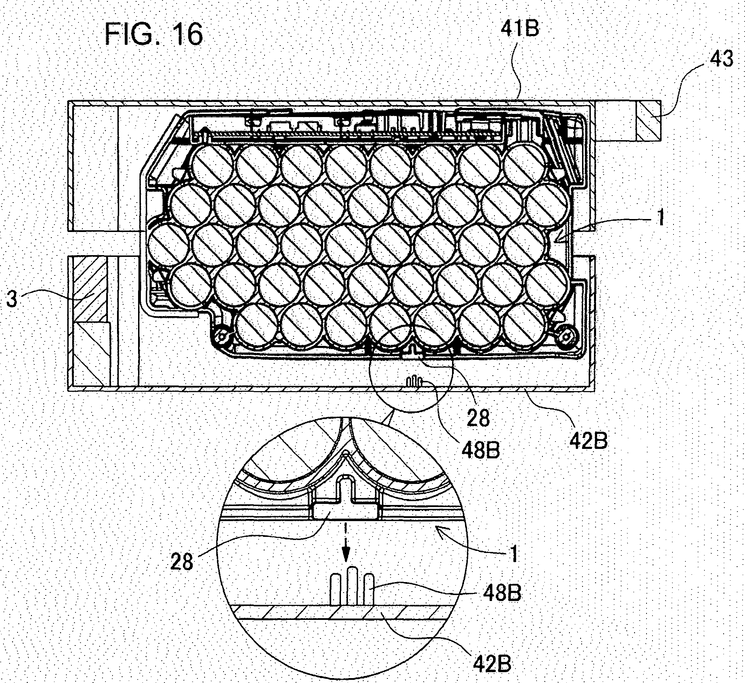

FIG. 16 is a exploded sectional view and a partially enlarged view in a state in which the battery block of the embodiment 1 is inserted into the outer case of the embodiment 2.

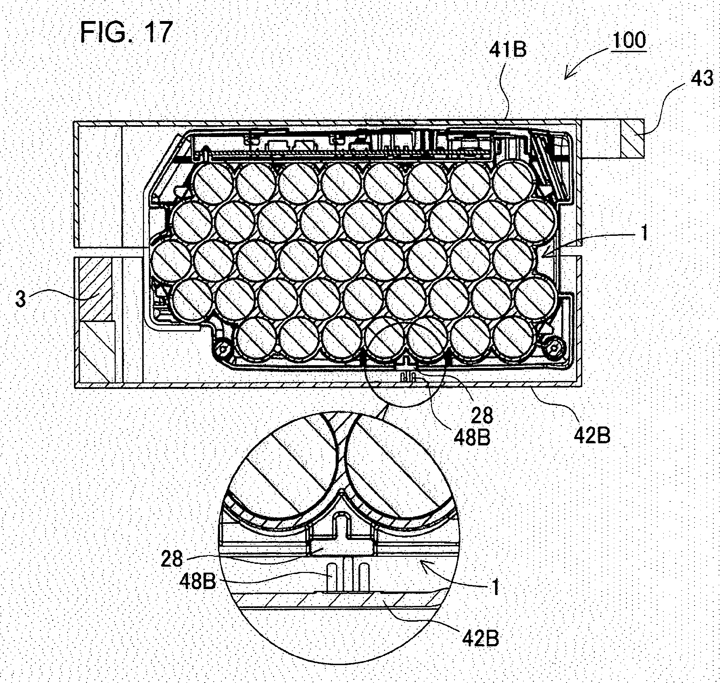

FIG. 17 is a sectional view and a partially enlarged view in a state in which a case side rib interferes with a holder side projection from the state of FIG. 16.

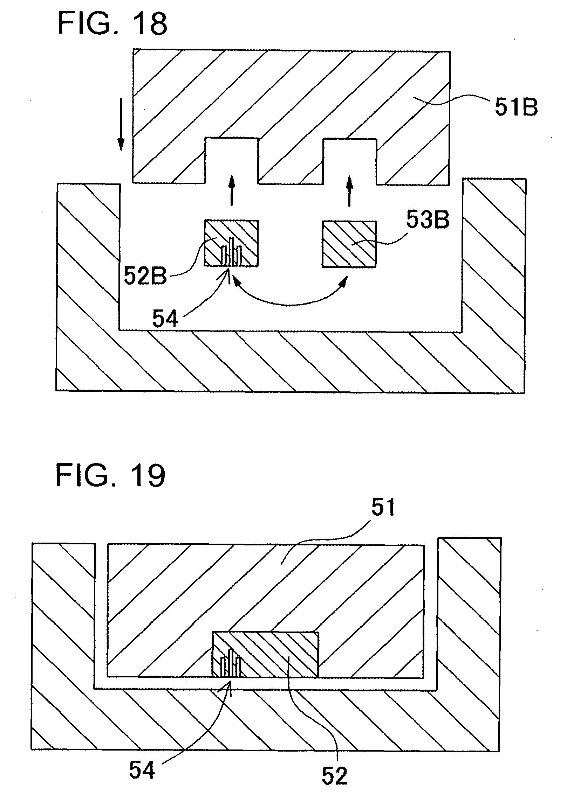

FIG. 18 is a schematic exploded sectional view of an example in which plural mold inserts are inserted into a main mold.
FIG. 19 is a schematic sectional view of a mold for molding the lower case of the embodiment 1.

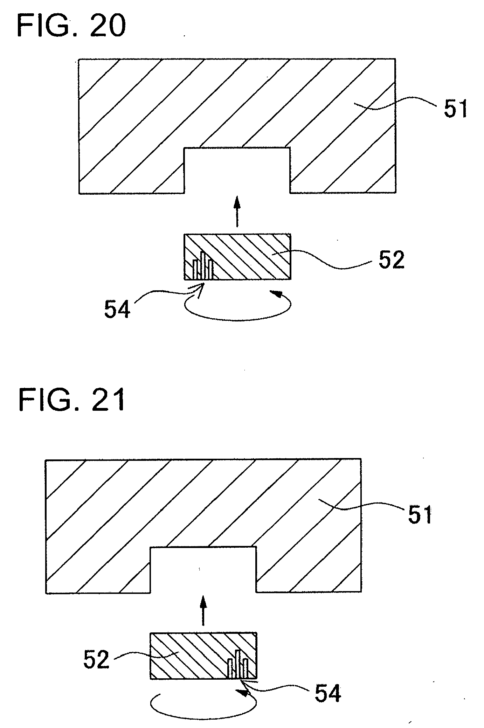

FIG. 20 is a schematic exploded sectional view in a state in which a mold insert is inserted into the main mold of FIG. 19.
FIG. 21 is a schematic exploded sectional view in a state in which the mold insert is inverted to mold the lower case of the embodiment 2 from FIG. 20.

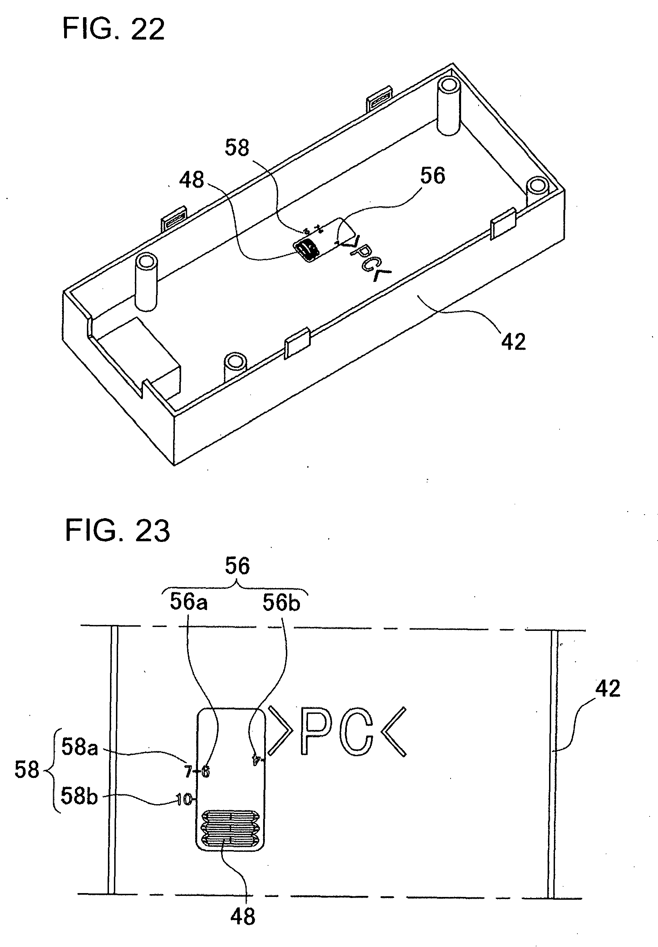

FIG. 22 is a perspective view of the lower case of FIG. 10.
FIG. 23 is a plan view of the case side rib of FIG. 22.

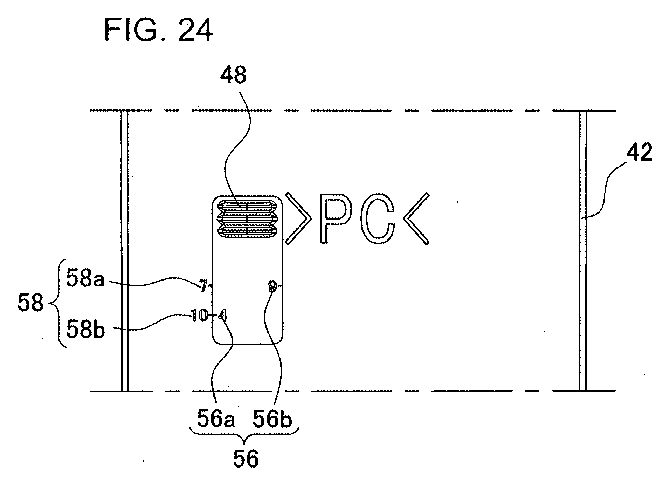

FIG. 24 is a plan view of the case side rib of the lower case in the battery pack of the embodiment 2.
FIG. 25 is a sectional view of a conventional battery pack containing a battery holder using 7 series × 6 parallel of the battery cells.
FIG. 26 is a sectional view of a conventional battery pack containing a battery holder using 10 series × 4 parallel of the battery cells.

### DESCRIPTION OF EMBODIMENTS

Hereinafter, the embodiment of the present invention will be described referring to drawings. However, the following embodiments illustrate a battery pack, and a manufacturing apparatus and a manufacturing method of the battery pack which are aimed at embodying the technological concept of the present invention, and the present invention is not limited to the battery pack, and the manufacturing apparatus and the manufacturing method of the battery pack described below. Furthermore, in this specification, reference numbers corresponding to members illustrated in the embodiments are added to members illustrated in "Claims" and "Means of Solving the Problems" for the better understanding of Claims. However, the members illustrated in Claims are not limited to the members in the embodiments. In particular, as long as specific descriptions are not provided, it is not intended that the claims be limited to sizes, materials, shapes, and relative arrangements of constitutional members described in the embodiments, which are mere descriptive examples. It is noted that the magnitude or positional relation of the members illustrated in each diagram is sometimes grandiloquently represented, in order to clarify the description. Furthermore, in the description below, identical names and reference numbers represent identical or homogeneous members, and detailed descriptions are appropriately omitted. Moreover, mode may be applied where each element constituting the present invention constitutes a plurality of elements with the use of the same member, thereby serving the plurality of elements with the use of one member, or, in contrast, mode may be realized where a function of the one member is shared by a plurality of members. Also, a portion of examples and the content described in the embodiments can be applied to other examples and another embodiment.

### (Embodiment 1)

In FIG. 1 to FIG. 5, as the battery pack 100 according to the embodiment 1of the present invention, an example which is applied to the battery pack for an assist bicycle is shown. In those figures, FIG. 1 is an external appearance perspective view of the battery pack of according to an embodiment 1, and FIG. 2 is an external appearance perspective view from the rear diagonally lower side of the battery pack of FIG.1, and FIG. 3 is an exploded perspective view of the battery pack of FIG.1, and FIG. 4 is an exploded perspective view of a battery block from FIG.3, and FIG. 5 is an exploded perspective view and an enlarged view from the rear diagonally lower side of the battery pack of FIG.4, and FIG. 6 is a sectional view along a line VI-VI in FIG. 1. The battery pack 100 shown in those figures comprises an outer case 40, and a battery block 1 which is stored therein. The outer case 40 is divided into two parts of an upper case 41 and a lower case 42 as shown in FIG. 1 to FIG. 4. The outer case 40 is made of plastic or the like which is excellent in insulation property. Further, a handle 43 is provided at one end of the outer case 40, and a connector 3 which is connected to the assist bicycle as a driving device is provided at the other end of the outer case 40. The upper case 41 and the lower case 42 have engaging projections and engaging openings in two positions at each side surface of the upper case 41 and the lower case 42, and the projection provided in the one divided case is engaged and connected to the engaging openings of the other divided case. Additionally, the outer case 40 is fixed in four positions by screws.

### (Cover 2)

In order that the battery block 1 is stored inside the outer case 40, the upper case 41 and the lower case 42 are each formed in a box shape having a bottom portion, and a storing space to store the battery block 1 is formed. Preferably shown in FIG. 3 and FIG. 4, the battery block 1 in a state of being covered by a cover 2 is disposed and stored between the upper case 41 and the lower case 42. The cover 2 is made of polyethylene or the like having waterproof and insulation property, and formed in a bag shape. The cover 42 is sealed in a state of inserting the battery block 1 into the cover 42.

Further, the battery block 1 is electrically connected to the connector 3 through lead line. The connector 3 is press-fitted into the periphery of C-shaped opening located at the bottom portion of the lower case 42, and the connector 3 is fixed to the outer case 40 by the upper case 41 closing the upper portion of the lower case 42. Additionally, the connector 3 has plural openings as a connecting socket which is connected to connecting terminals of the assist bicycle.

### (Battery block 1)

As shown in the explored perspective views of FIG. 4 to FIG. 5, the battery block 1 comprises plural battery cells 10, and a battery holder 20 which disposes the battery cells 10 at a predetermined position, lead plates 30 which are disposed at the outer side and connected to the battery cells by welding, and an electrical circuit board 46 which is connected to the lead plates 30, a board holder 44 which stores and holds this electrical circuit board 46, and insulating sheets 36 which insulate the surface of the lead plates 30.

### (Battery cell 10)

The battery cell 10 is a rechargeable secondary battery, and a lithium ion secondary battery is preferably used. But, a nickel hydride battery, or a nickel cadmium battery can be used. This battery cell 10 is a cylindrical battery, and plural battery cells 10 are arranged in parallel one another, and further plural battery cells 10 are stacked on these, the battery holder 20 holds those. Here, the longitudinal axes of the cylindrical battery cells 10 adjacent rows of those vertically stacked are offset, in other words, disposed in zigzags. From this, dead space which is made by stacking the cylindrical battery cells can be decreased. In the example of FIG. 4 to FIG. 6, the battery cells 10 arranged transversely constitutes one row (or one layer), and from the top, eight pieces of the battery cells 10 in one row (or one layer), nine pieces in three rows (or three layers), seven pieces in one row (or one layer) are stacked in five rows (or five rows), and total forty two pieces of the battery cells 10 are used. Furthermore, six pieces of the battery cells vertically arranged are electrically connected in parallel, and seven of those are electrically connected in series. Needless to say, the number of the row (or the layer), or the number of the battery cells in one row (or one layer) can be changed corresponding to a required capacity or voltage of the battery block.

In addition, end surfaces in the battery cells 10 are arranged approximately in the same plane. In this way, as the battery cells 10 are not arranged in the longitudinal direction, connections between the battery cells are carried out by welding the lead plate 30. Especially at both sides of the battery cells, namely as described below, by welding the lead plates 40 at both sides of the outer case 40 the connections between the battery cells are carried out. Further, in the structure in which only the one battery cell 10 is placed in the longitudinal direction and stacked, it has a merit that heat is easily radiated through the outer case 40.

### (Battery holder 20)

The battery holder 20 comprises a first holder 21, and a second holder by being divided into two parts, and the battery holder 20 holds the battery cells 10 so as to sandwich those from both sides. The first holder 21 and the second holder 22 are formed approximately in mirror symmetry. In each of the first holder 21 and the second holder 22, plural holding tubes 23 of a cylindrical shape in which the battery cells 10 are inserted are formed. The first holder 21 and the second holder 22 having the holding tubes 23 are formed integrally with holder frames 26. The battery holder 20 is made of resin, such as, for example, plastic excellent in insulation property.

The holding tubes 23 each have an electrode window 24 which penetrates the side in order to weld the lead plates 30 to end electrodes 11 of the battery cells 10. Each of the electrode windows 24 is formed at the size in which the lead plates 30 are welded. In the battery holder 20, the battery cells 10 are inserted into the holding tubes 23, and the plurality of the battery cells 10 are held at predetermined positions. As the battery holder 20 of the figures connects and holds thirty five of the cylindrical battery cells 10, thirty five of the electrode windows 24 are provided. Thirty five of the electrode windows 24 have 7 pieces per row (or layer) and five rows (or layers). Further, the holding tubes 23 shown in FIG. 4 and FIG. 5 disposes another battery cell 10 in a valley between adjacent battery cells 10, and plural rows (or layers) of the battery cells in a manner of log pile. In addition, the holding tubes 23 shown in the figures are divided into two parts in the middle in the direction of the longitudinal axes, and are coupled to each of the battery holder 20. Each of the battery holders 20 are formed integrally coupling the end portions of the divided holder tubes 23, and are made of plastic. In the holding tubes 23, the battery cells 10 are inserted into the opening of the divided end, and a pair of the holding tubes 23 are coupled each other, and the plurality of the battery cells 10 are held in predetermined positions.

The holding tube 23 divided in the middle has a tapered inner surface in which the internal diameter gradually decreases from the divided end side to the holder board side. In this holding tube 23, a projecting portion projecting into the inside at an end portion of the battery holder 20 side is in surface contact with the surface of the battery cell 10, and the battery cells 10 are held in predetermined positions. In this way, the structure in which the holding tube 23 is divided makes design of the mold molding plastic simple, and plastic molding easy.

### (Guide portion 25)

In the battery holder 20, the guide portions 25 which are coupled to the one end of the holding tubes 23, are provided on the outer sides of the battery holder 20. The lead plates 30 are inserted into the guide portions 25, and disposed at predetermined positions. In the battery holder 20, the end electrodes 11which are exposed from the electrode windows 24 are coupled to the lead plated 30 by welding. Namely the battery holder 20 shown in FIG. 4 to FIG. 6, has the guide portions 25 disposing the lead plates 30 at the outer side, and the lead plates 30 are disposed at the predetermined positions by the lead plates 30 being inserted into the guide portions.

In each of the battery cells 10, the lead plates 30 are welded to the end electrodes 11 at both ends thereof, and the battery cells 10 are connected in series or parallel. Also, each of the lead plates 40 is connected to the electrical circuit board 46. As shown in FIG. 4 to FIG. 6, the electrical circuit board 46 is stored in the board holder 44 which is disposed on the upper surface of the battery holder 20. The board holder 44 has a frame shaped structure in which an opening to store the electrical circuit board 46 is formed.

### (Electrical circuit board 46)

The electrical circuit board 46 has electrical circuits of a controlling circuit to control charging and discharging of the battery cells 10, or the like. The electrical circuit board 46 has a flat board shape, and as shown in FIG. 3 to FIG. 6, the electrical circuit board 46 is extended in the longitudinal direction of the battery holder 20. Additionally, the battery holder 20 has the board holder 44 storing the electrical circuit board 46 on the upper surface of the battery holder 20. The electrical circuit board 46 is fixed on the upper surface of the battery holder 20, and after necessary wirings, the battery holder 20 is stored into the outer case 40. Further, at the upper surface of the battery holder 20, a connecting portion 33 of each of the lead plates 30 projects, and the connecting portion 33 and the electrical circuit board 46 is connected by lead wire or the like. In this structure, wiring between the lead plate 30 and the electrical circuit board 46 is shortest, and an assembling process can be simplified, and then the lead wire as a separate member is used in the minimum range.

### (Lead plate 30)

As shown in perspective views of FIG. 4 and FIG. 5, the lead plates 30 are formed in a zigzag or wave shape so as to connect vertical two lines of the battery cells 10 in a state of stacking the battery cells 10 in offset. This lead plate 30 is made of a metal board excellent in conductivity and flexibility. Further, the lead plate 30 has slits which decrease no effective current at positions at which the lead plate 30 is spot-welded to the end electrodes 11 of the battery cells 10. Furthermore, the connecting portion 33 projects from the upper end of the lead plate 30, and the connecting portion 33 is connected to the electrical circuit board 46 through the lead wire.

As shown in FIG. 4 and FIG. 5, a shape of the lead plate 30 does not completely cover the end electrodes 11 of the stacked battery cells 11, the shape of the lead plate 30 is smaller than a completely covering shape. Accordingly, there are spaces between the lead plates 30 and the guide portions 25 in a state of the lead plate 30 being inserted within a frame of the guide portions 25 of the lead plate 30.

### (Holder side projection 28)

As shown in the enlarged view of FIG. 5 and the sectional views of FIG. 6 to FIG. 8, a holder side projection 28 projects from the bottom surface of the battery holder 20. The holder side projection 28 is extended in parallel with the holding tube 23 from the holder frame 26. Preferably, the holder side projection 28 is disposed in a valley between the adjacent holding tube 23. In this way, even though the holder side projection faces the bottom surface of the battery holder 20, by not projecting downward from the bottom surface, it avoids increasing in size of the battery holder or the outer case, and then the battery pack can be down-sized

### (Case side rib 48)

As shown in the sectional views of FIG. 6 to FIG. 8, the perspective view of FIG. 9, and the exploded perspective view of FIG. 10, the case side rib 48 projects from the inner bottom surface of the lower case 42. In the case side rib 48, three sheets of ribs are in spaced relationship each other. In this structure, when the top end of the case side rib 48 contacts the cover 2, as the pressure is decreased, it prevents damage of the cover 2. In addition, as each of the ribs has a curved shape of the tip portion without a sharp portion, the cover 2 is not damaged. Furthermore, the center rib is higher than the right and left ribs. Also, by this structure, as the projecting size is gradually changed from the right and left, the pressure by the top end of the case side rib 48 toward the cover 2 is decreased, it is prevented that the cover 2 is damaged by the top end of the rib.

As shown in the sectional views of FIG. 6 to FIG. 8, the perspective view of FIG. 9, and the exploded perspective view of FIG. 10, the case side rib 48 projects from the inner bottom surface of the lower case 42. In the case side rib 48, three sheets of ribs are in spaced relationship each other. In this structure, when the top end of the case side rib 48 contacts the cover 2, as the pressure is decreased, it prevents damage of the cover 2. In addition, as each of the ribs has a curved shape of the tip portion without a sharp portion, the cover 2 is not damaged. Furthermore, the center rib is higher than the right and left ribs. Also, by this structure, as the projecting size is gradually changed from the right and left, the pressure by the top end of the case side rib 48 toward the cover 2 is decreased, it is prevented that the cover 2 is damaged by the top end of the rib.

In addition, when by using a similar shaped battery block, an outer appearance shape of the outer case is commonly used as common parts utilization for cost reduction, and by utilizing the positions of the holder side projections and the case side ribs in the above, mistakes or mix-ups can be prevented. Concretely, as the second positions of the holder side projections in the battery holders are set at different positions according to the types of the battery blocks, when it is attempted that the different type of the battery block is inserted into the lower case, the holder side projection of the different type of the battery block interferes with the case side rib, and then wrong combination of the battery block and the outer case is avoided. Such structures are explained below based on FIG. 13 to FIG. 17.

### (Embodiment 2)

The battery pack 200 related to the embodiment 2 is shown in FIG. 11 to FIG. 12. In those figures, FIG. 11 is a sectional view and a partial enlarged view of the battery pack 200 according to an embodiment 2, and FIG. 12 is an exploded sectional view in a state in which the lower case 42B of FIG. 11 is disassembled from the battery block 1 B. This battery pack 200 has the outer case of the same external appearance as the embodiment 1, but the different battery block inside. Concretely, the battery block 1 B of the embodiment 2 has the total forty pieces of the battery cell 10 of ten series × four parallel. Also in this embodiment 2, the holder side projection 28B of the battery holder 28, and the case side rib 48B of the lower case 42B, are disposed in offset such that they do not interfere with each other in a state of the battery block 1 B being inserted into the lower case 42B. Accordingly, as shown in FIG. 11 and FIG. 12, the battery block 1 B is inserted into the lower case 42B, and the upper case 41 B and the lower case 42B can be assembled and fixed.

Here, the holder side projection 28B of the battery holder 20B is disposed at a different position from the battery holder 20 of the embodiment 1. Concretely, the holder side projection 28B is disposed at a position corresponding to the first position at which the case side rib 48 is provided in the lower case 42 of the embodiment 1. As a result, when it is attempted that the battery block 1 B of the embodiment 2 is inserted into the lower case 42 of the embodiment 1 as shown in FIG. 13 and FIG. 14, as the holder side projection 28B of the embodiment 2 interferes with the case side rib 48 of the embodiment 1 as shown FIG. 15, the battery block 1 B cannot be inserted into the lower case 42, and then the battery block 1B is in a floating state. Therefore, there is a space between the upper case 41 and the lower case 42, and they cannot be assembled, and then the outer case 40 is not fixed. Namely, in a assembling process, even though such mistakes or mix-ups happens, as assembling cannot be physically carried out by physical contact, it is considered that worker find out the mistakes or mix-ups, and assembling of the batter pack in wrong combination of the battery block and the outer case is prevented, as a result shipping of such products is prevented.

In the same way, the case side rib 48B of the lower case 42B in the embodiment 2 is also disposed at a different position from the first position at which the case side rib 48 is provided. Concretely, the case side rib 48B of the lower case 42B in the embodiment 2 is disposed at a position corresponding to the second position at which the holder side projection 28 is provided in the battery holder 20 of the embodiment 2. In other words, the lower case 42B of the embodiment 2 has the same outer appearance as that of the embodiment 1, but the case side rib 48B projecting inside is disposed at the different position. As a result, when it is attempted that the battery block 1 of the embodiment is inserted into the lower case 42B of the embodiment 2 as shown in FIG. 16 and FIG. 17, as the holder side projection 28 of the embodiment 1 interferes with the case side rib 48B of the embodiment 2, and then the battery block 1 is in a floating state. Therefore, there is a space between the upper case 41 B and the lower case 42B, and they cannot be assembled, and then the outer case 40B is not fixed. Accordingly, assembling is physically prevented by physical contact, and such mistakes or mix-ups is avoided.

Here, in the above example, the case side rib is provided on the bottom surface side of the lower case, other embodiments are not limited to this structure, for example, the case side rib is provided in the upper case, and then the same effects can be obtained. Further, the case side rib is not limited to being disposed at the bottom surface side of the outer case, the case side rib can also be disposed at the inner side surface of the outer case. In addition, in this example, the case side rib is provided at only one position, but needless to say, the case side rib can be provided at plural positions.

In this way, the battery blocks having the similar appearance have the holder side projections at the different positions, and the positions of the holder side projections are exchanged each other, and then the incorrect inserting protection structure can be easily realized. Also, in the same way in the outer case, the structure in which the positions of the case side rib are exchanged each other is used, and the incorrect inserting protection structure can be easily realized, and then cost reduction is carried out.

### (Mold for molding)

Especially, in order to partially deform a mold molding the outer case, in the portion of molding the case side rib in the mold for molding, the mold insert can be used. Namely, the mold insert molding the case side is separately prepared, and this mold insert is used as replacing type, and then the main mold (=the mold body) is commonly used as common parts utilization. Therefore, cost of the mold is largely reduced.

Concretely, as shown in FIG. 18, the mold for molding of the lower case 42 comprises a main mold (=mold body) 51 B, and a mold insert 52B. The main mold 51 B has openings at which the case side ribs are provided in different lower cases, and the mold insert 52B having a profile 54 for rib is inserted into the first position at which the case side rib 48 is provided in the lower case. Further, the mold insert 53B of a dummy having no profile for rib is inserted into a position at which the case side rib is not provided in the lower case.

### (Mold insert 52)

However, in the structure of FIG. 18, the size in each of the mold inserts 52B becomes small, and it is necessary to prepare plural the mold inserts 52B. Accordingly, it is necessary to pay attention to manufacturing or management of the mold, and mistakes or mix-ups or the like of the mold. Further, it is thought that the small mold is easily lost in the case of nonuse of the mold.
Accordingly, as shown in FIG. 19 and FIG. 21, the mold insert 52 is made bigger, and the mold insert 52 covers the area including positions of predetermined case side ribs, and then the outer appearance of the mold insert 52 is in left - right symmetry. Further, the portion of the mold for molding the case side rib in the mold insert 52 is decentered, and then by inverting the mold insert, the position of the case side rib can be changed. According to this structure, when the lower case 42 of the embodiment 1 is molded, as shown in FIG. 20, the case side rib is disposed at the left side. Further, when the lower case 42B of the embodiment 2 is molded, once the mold insert 52 is detached from the main mold, and the mold insert 52 in an inverted posture is inserted into the main mold, and then the mold for the embodiment 2 is made. By this way, only one of the mold insert 52 is necessary, and its outer appearance becomes big, and then the problem to be lost is reduced.

In the example of FIG. 21, the outer appearance of the mold insert 52 is a rectangular box shape, the portions corresponding to the case side rib can be located in symmetric positions centered on a inverting axis. Accordingly, as the mold insert in a state of inverting the mold insert is inserted into the main mold 51, the positions at which the case side ribs are provided can be exchanged. Concretely, when the case side rib 48 of the embodiment 1 is molded, as shown in FIG. 20, the mold insert at a posture at which the profile 54 for rib is located at the left side is inserted into the main mold 51. On the other hand, when the case side rib 48B of the embodiment 2 is molded, as shown in FIG. 21, the mold insert at a posture at which the profile 54 for rib is located at the right side is inserted into the main mold 51. Thus, by changing the posture of the mold insert 52 corresponding to the required lower case, the positions of the case side rib can be easily changed.

### (Mold insert side carved seal 56)

Further, by the mold insert 52, a mold insert side carved seal 56 can be made to the lower case. For example, by showing information indicating types of the outer case through a carved seal, the types of the outer case are visually identified in the assembling process. By this carved seal, the combination of the correct battery block is confirmed, and it makes the confirmation at the assembling process easy, and then mistakes or mix-ups are reduced. This way is explained based on FIG. 22 to FIG. 24. In these figures, FIG. 22 is a perspective view of the lower case 42 of FIG. 10, FIG. 23 is a plan view of the case side rib 48 of FIG. 22, and FIG. 24 is a plan view of the case side rib 48B of the lower case 42B in the battery pack 200 of the embodiment 2.

As mentioned above, at the time of molding the lower case 42 of the embodiment 1, the mold insert 52 is inserted into the main mold 51 such that the profile 54 for the rib is located at the left side. Here, in the battery pack 100 of the embodiment 1 the battery cells 10 are used as 7 series × 6 parallel. As shown in a perspective view of FIG. 22 the carved seal is provided on the Inner surface of the lower case 42 so as to show that the type of the molded lower case 42 is the combination of the embodiment 1. By the carved seal being provided on the inner surface, the carved seal is visually confirmed at the assembling process, and the carved seal is not exposed outside after the assembling, and then it does not influence the outer appearance.

Concretely, in the lower case 42 of the embodiment 1, as shown in an enlarged view of FIG. 23, "7-6" is displayed. On the other hand, in the lower case 42 of the embodiment 2, as shown in an enlarged view of FIG. 24, "10-4" is displayed, and the battery cells 10 of 10 series × 4 parallel are visually confirmed. In this way, in order to change the position of the case side rib, by using inverting the mold insert 52, the position of the carved seal corresponding to the postures of the mold insert 52 is also changed. As a result, the information displayed by the carved seal is also changed. As the type of the lower case is directly displayed as the character information, an efficiency of working at the assembling is improved, and mistakes or mix-ups can be more prevented

### (Main mold side carved seal 58)

The carved seal is constituted by the main mold side carved seal 58 made by the main mold 51 and the mold insert side carved seal made by the mold insert 52. The main mold side carved seal 58 is made always at the same position, on the other hand, the position of the mold insert carved seal 56 is changed corresponding to the postures of the mold insert 52. Therefore, the main mold side carved seal 58 and the mold insert carved seal 56 each have plural portions, and positions of the carved seals are predetermined corresponding to the postures of the mold insert 52, such that appropriate combinations of the main mold side carved seal 58a, 58b and the mold insert side carved seal 56a, 56b are displayed. In the example of FIG. 23 and FIG. 24, in the lower case 42, 42B, the main mold side carved seal 58 is made as a first main mold side carved seal of "7"and a second carved seal of "10" vertically. In contrast, the mold insert side carved seal 56 is made as a first mold insert side carved seal 56a "6" and a second mold insert side carved seal 56b "4" divided at the right and left in the inverted postures.

As shown in FIG. 23, in the lower case 42 of the embodiment 1, the first mold insert side carved seal 56a of "6" is located at the upper side position of the first main mold side carved seal 58a of "7", and by the connection of these, "7-6" is displayed. In this state, nothing laterally next to the second main mold side carved seal 58b of "10" is displayed, and the second mold insert carved seal 56b of "4" is displayed in the inverted posture, and then these carved seals do not constitute the display of the character information. On the other hand, as shown in FIG. 24, in the lower case 42B of the embodiment 2, the second mold insert side carved seal 56b of "4" is located at the upper side position of the second main mold side carved seal 58b of "4", and by the connection of these, "10-4" is displayed. In this state, nothing laterally next to the first main mold side carved seal 58a of "7" is displayed, and the first mold insert carved seal 56a of "6" is displayed in the inverted posture, and then these carved seals do not constitute the display of the character information. In this way, corresponding to the positions of the mold insert 52, by the mold insert side carved seal 56a, 56b, and the main mold side carved seal 58a, 58b, "_series ×_ parallel" of the battery pack can be read, the assembling worker can distinguish as to which battery pack the present lower case is for.

Thus, by utilizing changing of the position of the mold insert side carved seal 56 through inverting the mold insert 52, in order that the information of the lower case corresponding to the postures of the mold insert is correctly displayed, the positions of the carved seals are adjusted in advance. Further, in order that such carved seal is made, the mold insert 52 has a profile for the mold insert side carved seal to mark the mold insert side carved seal 56 showing the character information related to the first position at the periphery of the case side rib 48 on the inner surface of the outer case 40. In the same way, the main mold 51 has a profile for the main mold side carved seal to mark the main mold side carved seal 58a, 58b at the periphery of the mold insert 52. In addition, as these carved seals are located on the same inner side as the case side rib 48, namely on the inner surface of the outer case 40, no carved seal is not exposed outside, and then it does not influence the outer appearance after the assembling.

### INDUSTRIAL APPLICABILITY

A battery pack, and a manufacturing apparatus and a manufacturing method of the battery pack according to the present invention can be suitably used for a power tool, an electric scooter, an electric car, an electric power storage, or the like besides a power source for an assist bicycle.

## Claims

1. A battery pack comprising:
an outer case (40); and
a battery holder (20) holding plural battery cells,
wherein the outer case (40) is provided with a case side rib (48) protruding from a first position on an inner surface thereof, and the battery holder (20) is provided with a holder side projection (28) protruding from a second position on an outer surface, and the battery holder (20) is configured so that the second position, at which the holder side projection (28) is provided, is located at a different position to that for a battery holder (20) of a different type, and
wherein the first and second positions are disposed at positions at which the case side rib (48) does not interfere with the holder side projection (28) when the battery holder (20) is inserted into the outer case (40), and the case side rib (48) interferes with the holder side projection (28) when an attempt is made to insert the battery holder (20) of a different type into the outer case (40), and the first and second positions are disposed in symmetric positions on a predetermined axis of symmetry.

2. The battery pack according to claim1,
wherein the outer case (40) comprises a first case and a second case, and when a combination of the outer case (40) and the battery holder (20) is not correct, the case side rib (48) interferes with the holder side projection (28) so that the first case and the second case are not assembled.

3. The battery pack according to claim 1 or 2,
further comprising a waterproof cover covering the battery holder (20),
wherein in the case side rib (48), plural ribs are formed in spaced relationship with each other.

4. The battery pack according to claim 3,
wherein in the plural ribs, the central rib thereof projects higher than the other ribs.

5. The battery pack according to any one of claims 1 to 4,
wherein a mold insert side carved seal of character information related to the first position is formed at the periphery of the case side rib (48) on the inner surface of the outer case (40).

6. The battery pack according to claim 5,
wherein a main mold side carved seal is formed at the periphery of the case side rib (48) on the inner surface of the outer case (40), and is connected to the mold insert side carved seal, and an information of a type of the outer case (40) is shown

7. The battery pack according to any one of claims 1 to 6,
wherein the outer case (40) is molded by a mold, and the mold comprises a main mold and a mold insert which is enable to be inserted into the main mold, and the mold insert is to mold the case side rib (48), and by changing the mold insert, the first position is changed to a position .

8. The battery pack according to claim 7,
wherein the mold insert is made in a symmetric shape on a predetermined axis of symmetry, and by inserting the mold insert into the main mold in a state of inverting the mold insert, the first position is changed to a position corresponding to the second position.

9. The battery pack according to claim 7 or 8,
wherein the mold insert side carved seal showing the character information related to the first position is marked on the outer case (40) by the mold insert, and the main mold side carved seal is made next to a position at which the mold insert side carved seal is made at the periphery of the mold insert by the main mold, and the main mold side carved seal is connected to the mold insert side carved seal, and an information of a type of the outer case (40) is shown.

10. The battery pack according to claim 9,
wherein the main mold side carved seal comprises plural pieces of different contents at different positions, and by inverting the mold insert, a position of the mold insert side carved seal is changed, and at the changed position, the mold insert side carved seal is connected to one piece of the main mold side carved seal, and an information of a type of the outer case (40) is shown.

11. A manufacturing apparatus of a battery pack which includes an outer case (40), and a battery holder (20) holding plural battery cells, comprising:
a main mold molding the outer case (40); and
a mold insert being enable to inserted into the main mold, and having a profile for rib which projects from an inner surface of the outer case (40) and is located at a first position to form a case side rib,
wherein the first position is adjusted so as not to interfere with a second position at which a holder side projection (28) projecting from the outer surface of the battery holder (20) is provided, and in different types of the battery holders the second positions are changed in different positions each other, and by changing the mold insert, a first position is changed, and a second position of a battery holder corresponding to the outer case (40) molded by the mold insert does not interfere with the first position, and the first position is adjusted such that the second position of the battery holder not corresponding to the outer case (40) interferes with the first position.

12. The manufacturing apparatus of a battery pack according to claim 11,
wherein the mold insert has a profile for a mold insert side carved seal so as to mark the mold insert side carved seal showing character information related to the first position at the periphery of the case side rib (48) on the inner surface of the outer case (40).

13. The manufacturing apparatus of a battery pack according to claim 12,
wherein the main mold has a profile for a main mold side carved seal to mark the main mold side carved seal at a periphery of the mold insert, and by inverting the mold insert, the position of the mold insert side carved seal is changed, and the main mold side carved seal is connected to the mold insert side carved seal, and an information of a type of the outer case (40) is shown.

14. The manufacturing apparatus of a battery pack according to claim 13,
wherein the main mold side carved seal comprises plural pieces of different contents at different positions, and by inverting the mold insert, a position of the mold insert side carved seal is changed, and at the changed position, the mold insert side carved seal is connected to one piece of the main mold side carved seal, and an information of a type of the outer case (40) is shown.

15. A manufacturing method of a battery pack which includes an outer case (40), and a battery holder (20) holding plural battery cells, comprising:
Selecting and inserting a mold insert to enable to be inserted into a main mold which molds the outer case (40);
forming a case side rib (48) which projects from the inner surface of the outer case (40) and is located at a first position by the main mold into which the mold insert is inserted at the time of molding the outer case (40);
forming a holder side projection (28) projecting from the outer surface of the battery holder (20) at a second position at the time of molding the battery holder (20) to enable to be stored in the outer case (40); and
storing the battery holder (20) in the outer case (40),
wherein the first position is adjusted such that the second position of the battery holder (20) interferes with the first position
wherein in different types of the battery holders the second positions are changed in different positions each other, and by changing the mold insert, a first position is changed, and a second position of a battery holder corresponding to the outer case (40) molded by the mold insert does not interfere with the first position, and the first position is adjusted such that the second position of the battery holder not corresponding to the outer case (40) interferes with the first position.

## Patentansprüche

1. Batteriepack, das umfasst:
ein äußeres Gehäuse (40); und
einen Batteriehalter (20), der eine Vielzahl von Batteriezellen hält,
wobei das äußere Gehäuse (40) mit einem Gehäuseseiten-Steg (48) versehen ist, der von einer ersten Position an seiner Innenfläche vorsteht, und der Batteriehalter (20) mit einem Halterseiten-Vorsprung (28) versehen ist, der von einer zweiten Position an einer Außenfläche vorsteht, und der Batteriehalter (20) so eingerichtet ist, dass sich die zweite Position, an der der Halterseiten-Vorsprung (28) vorhanden ist, an einer anderen Position als der für einen Batteriehalter (20) eines anderen Typs befindet, und
die erste und die zweite Position an Positionen angeordnet sind, an denen der Gehäuseseiten-Steg (48) den Halterseiten-Vorsprung (28) nicht behindert, wenn der Batteriehalter (20) in das äußere Gehäuse (40) eingeführt wird, und der Gehäuseseiten-Steg (48) den Halterseiten-Vorsprung (28) behindert, wenn versucht wird, den Batteriehalter (20) eines anderen Typs in das äußere Gehäuse (40) einzuführen, und sich die erste und die zweite Position an symmetrischen Positionen an einer vorgegebenen Symmetrieachse befinden.

2. Batteriepack nach Anspruch 1,
wobei das äußere Gehäuse (40) ein erstes Gehäuse und ein zweites Gehäuse umfasst, und, wenn eine Kombination aus dem äußeren Gehäuse (40) und dem Batteriehalter (20) nicht fehlerfrei ist, der Gehäuseseiten-Steg (48) den Halterseiten-Vorsprung (28) behindert, so dass das erste Gehäuse und das zweite Gehäuse nicht zusammengesetzt werden.

3. Batteriepack nach Anspruch 1 oder 2,
das des Weiteren eine wasserdichte Abdeckung umfasst, die den Batteriehalter (20) abdeckt,
wobei an dem Gehäuseseiten-Steg (48) mehrere Stege in beabstandeter Beziehung zueinander ausgeformt sind.

4. Batteriepack nach Anspruch 3,
wobei von den mehreren Stegen der mittlere Steg höher vorsteht als die anderen Stege.

5. Batteriepack nach einem der Ansprüche 1 bis 4,
wobei ein Reliefsiegel an der Seite eines Formeinsatzes mit Zeicheninformationen, die sich auf die erste Position beziehen, am Umfang des Gehäuseseiten-Stegs (48) an der Innenfläche des äußeren Gehäuses (40) ausgeformt ist.

6. Batteriepack nach Anspruch 5,
wobei ein Reliefsiegel an der Seite einer Hauptform an dem Umfang des Gehäuseseiten-Stegs (48) an der Innenfläche des äußeren Gehäuses (40) ausgeformt ist und mit dem Reliefsiegel an der Seite eines Formeinsatzes verbunden ist und eine Information über einen Typ des äußeren Gehäuses (40) angezeigt wird.

7. Batteriepack nach einem der Ansprüche 1 bis 6,
wobei das äußere Gehäuse (40) mit einer Form geformt wird, und die Form eine Hauptform sowie einen Formeinsatz umfasst, der in die Hauptform eingeführt werden kann, und der Formeinsatz dazu dient, den Gehäuseseiten-Steg (48) zu formen, und durch Verändern des Formeinsatzes eine Position der ersten Position geändert wird.

8. Batteriepack nach Anspruch 7,
wobei der Formeinsatz in einer symmetrischen Form an einer vorgegebenen Symmetrieachse erzeugt wird, und, wenn der Formeinsatz in einem umgekehrten Zustand des Formeinsatzes in die Hauptform eingeführt wird, die erste Position zu einer Position geändert wird, die der zweiten Position entspricht.

9. Batteriepack nach Anspruch 7 oder 8,
wobei das Reliefsiegel an der Seite des Formeinsatzes, das die Zeicheninformation anzeigt, die sich auf die erste Position bezieht, mit dem Formeinsatz an dem äußeren Gehäuse (40) ausgebildet wird, und das Reliefsiegel an der Seite der Hauptform nahe an einer Position erzeugt wird, an der das Profilsiegel an der Seite des Formeinsatzes am Umfang des Formeinsatzes mit der Hauptform erzeugt wird und das Profilsiegel an der Seite der Hauptform mit dem Profilsiegel an der Seite des Formeinsatzes verbunden ist und eine Information über einen Typ des äußeren Gehäuses (40) angezeigt wird.

10. Batteriepack nach Anspruch 9,
wobei das Profilsiegel an der Seite der Hauptform mehrere Elemente unterschiedlichen Inhalts an unterschiedlichen Positionen umfasst und, wenn der Formeinsatz umgedreht wird, eine Position des Profilsiegels an der Seite des Formeinsatzes geändert wird und an der geänderten Position das Profilsiegel an der Seite des Formeinsatzes mit einem Element des Profilsiegels an der Seite der Hauptform verbunden wird und eine Information über einen Typ des äußeren Gehäuses (40) angezeigt wird.

11. Verfahren zum Fertigen eines Batteriepacks, das ein äußeres Gehäuse (40) und einen Batteriehalter (20) enthält, der mehrere Batteriezellen hält, wobei es umfasst:
eine Hauptform zum Formen des äußeren Gehäuses (40); sowie
einen Formeinsatz, der in die Hauptform eingesetzt werden kann und ein Profil für einen Steg hat, der von einer Innenfläche des äußeren Gehäuses (40) vorsteht und sich an einer ersten Position zum Ausbilden eines Gehäuseseiten-Stegs befindet,
wobei die erste Position so eingestellt wird, dass sie sich nicht mit einer zweiten Position überlagert, an der sich ein Halterseiten-Vorsprung (28) befindet, der von der Außenfläche des Batteriehalters (20) vorsteht, und bei unterschiedlichen Typen der Batteriehalter die zweiten Positionen zu voneinander verschiedenen Positionen geändert werden, und, wenn der Formeinsatz verändert wird, eine erste Position geändert wird und sich eine zweite Position eines Batteriehalters, der dem mit dem Formeinsatz geformten äußeren Gehäuse (40) entspricht, nicht mit der ersten Position überlagert, und die erste Position so eingestellt wird, dass sich die zweite Position des Batteriehalters, der nicht dem äußeren Gehäuse (40) entspricht, mit der ersten Position überlagert.

12. Vorrichtung zum Fertigen eines Batteriepacks nach Anspruch 11,
wobei der Formeinsatz ein Profil für ein Profilsiegel an der Seite des Formeinsatzes hat, durch das das Profilsiegel an der Seite des Formeinsatzes, das Zeicheninformationen anzeigt, die sich auf die erste Position beziehen, an dem Umfang des Gehäuseseiten-Stegs (48) an der Innenfläche des äußeren Gehäuses (40) ausgebildet wird.

13. Verfahren zum Fertigen eines Batteriepacks nach Anspruch 12,
wobei die Hauptform ein Profil für ein Profilsiegel an der Seite der Hauptform hat, durch das das Profilsiegel an der Seite der Hauptform an einem Umfang des Formeinsatzes ausgebildet wird, und, wenn der Formeinsatz umgekehrt wird, die Position des Profilsiegels an der Seite des Formeinsatzes geändert wird und das Profilsiegel an der Seite der Hauptform mit dem Profilsiegel an der Seite des Formeinsatzes verbunden ist und eine Information über einen Typ des äußeren Gehäuses (40) angezeigt wird.

14. Verfahren zum Fertigen eines Batteriepacks nach Anspruch 13,
wobei das Profilsiegel an der Seite der Hauptform mehrere Elemente unterschiedlichen Inhalts an unterschiedlichen Positionen umfasst und, wenn der Formeinsatz umgedreht wird, eine Position des Profilsiegels an der Seite des Formeinsatzes geändert wird und an der geänderten Position das Profilsiegel an der Seite des Formeinsatzes mit einem Element des Profilsiegels an der Seite der Hauptform verbunden wird und eine Information über einen Typ des äußeren Gehäuses (40) angezeigt wird.

15. Verfahren zum Fertigen eines Batteriepacks, der ein äußeres Gehäuse (40) und einen Batteriehalter (20) enthält, der mehrere Batteriezellen hält, wobei es umfasst:
Auswählen und Einsetzen eines Formeinsatzes, der in eine Hauptform eingesetzt werden kann, mit der das äußere Gehäuse (40) geformt wird;
Ausformen eines Gehäuseseiten-Stegs (48), der von der Innenfläche des äußeren Gehäuses (40) vorsteht und sich an einer ersten Position befindet, mit der Hauptform, in die der Formeinsatz beim Formen des äußeren Gehäuses (40) eingesetzt wird;
Ausformen eines Halterseiten-Vorsprungs (28), der von der Außenfläche des Batteriehalters (20) an einer zweiten Position vorsteht, beim Formen des Batteriehalters (20), so dass er in dem äußeren Gehäuse (40) untergebracht werden kann; und
Unterbringen des Batteriehalters (20) in dem äußeren Gehäuse (40),
wobei die erste Position so eingestellt wird, dass sich die zweite Position des Batteriehalters (20) mit der ersten Position überlagert,
und bei verschiedenen Typen der Batteriehalter die zweiten Positionen zu Positionen geändert werden, die sich voneinander unterscheiden, und, wenn der Formeinsatz verändert wird, eine erste Position geändert wird, und sich eine zweite Position eines Batteriehalters, der dem mit dem Formeinsatz geformten äußeren Gehäuse (40) entspricht, nicht mit der ersten Position überlagert, und die erste Position so eingestellt wird, dass sich die zweite Position des Batteriehalters, der dem äußeren Gehäuse (40) nicht entspricht, mit der ersten Position überlagert.

## Revendications

1. Batterie d'accumulateurs comprenant :
un boîtier externe (40) ; et
un support de batterie (20) contenant une pluralité de cellules de batterie,
dans laquelle le boîtier externe (40) est pourvu d'une nervure latérale de boîtier (48) qui ressort depuis une première position sur une surface interne de celui-ci, et le support de batterie (20) est pourvu d'une projection latérale de support (28) qui ressort depuis une deuxième position sur une surface externe, et le support de batterie (20) est configuré de telle sorte que la deuxième position, à laquelle est pourvue la projection latérale de support (28), se trouve à une position différente de celle d'un support de batterie (20) d'un type différent, et
dans laquelle les première et deuxième positions sont agencées à des positions où la nervure latérale de boîtier (48) n'interfère pas avec la projection latérale de support (28) quand le support de batterie (20) est inséré dans le boîtier externe (40), et la nervure latérale de boîtier (48) interfère avec la projection latérale de support (28) quand une tentative d'insertion du support de batterie (20) d'un type différent dans le boîtier externe (40) est effectuée, et les première et deuxième positions sont agencées à des positions symétriques sur un axe de symétrie prédéterminé.

2. Batterie d'accumulateurs selon la revendication 1,
dans laquelle le boîtier externe (40) comprend un premier boîtier et un deuxième boîtier, et quand une combinaison du boîtier externe (40) et du support de batterie (20) n'est pas correcte, la nervure latérale de boîtier (48) interfère avec la projection latérale de support (28) de telle sorte que le premier boîtier et le deuxième boîtier ne sont pas assemblés.

3. Batterie d'accumulateurs selon la revendication 1 ou 2,
comprenant en outre un couvercle étanche à l'eau recouvrant le support de batterie (20),
dans laquelle, dans la nervure latérale de boîtier (48), plusieurs nervures sont formées avec un agencement spatial entre elles.

4. Batterie d'accumulateurs selon la revendication 3,
dans laquelle, dans la pluralité de nervures, la nervure centrale de celles-ci se projette plus haut que les autres nervures.

5. Batterie d'accumulateurs selon l'une quelconque des revendications 1 à 4,
dans laquelle un joint gravé du côté de l'insert de moule avec de l'information de caractère relative à la première position est formé à la périphérie de la nervure latérale de boîtier (48) sur la surface interne du boîtier externe (40).

6. Batterie d'accumulateurs selon la revendication 5,
dans laquelle un joint gravé du côté du moule principal est formé à la périphérie de la nervure latérale de boîtier (48) sur la surface interne du boîtier externe (40), et est connecté au joint gravé du côté de l'insert de moule, et une information du type du boîtier externe (40) est montrée.

7. Batterie d'accumulateurs selon l'une quelconque des revendications 1 à 6,
dans laquelle le boîtier externe (40) est moulé par un moule, et le moule comprend un moule principal et un insert de moule qui peut être inséré dans le moule principal, et l'insert de moule est destiné à mouler la nervure latérale de boîtier (48), et en changeant l'insert de moule, la première position est changée à une position.

8. Batterie d'accumulateurs selon la revendication 7,
dans laquelle l'insert de moule est réalisé avec une forme symétrique sur un axe de symétrie prédéterminé, et en insérant l'insert de moule dans le moule principal dans un état de retournement de l'insert de moule, la première position est changée à une position correspondant à la deuxième position.

9. Batterie d'accumulateurs selon la revendication 7 ou 8,
dans laquelle le joint gravé du côté de l'insert de moule montrant l'information de caractère relative à la première position est marqué sur le boîtier externe (40) par l'insert de moule, et le joint gravé du côté du moule principal est réalisé près d'une position dans laquelle le joint gravé du côté de l'insert de moule est réalisé à la périphérie de l'insert de moule par le moule principal, et le joint gravé du côté du moule principal est connecté au joint gravé du côté de l'insert de moule, et une information du type du boîtier externe (40) est montrée.

10. Batterie d'accumulateurs selon la revendication 9,
dans laquelle le joint gravé du côté du moule principal comprend plusieurs éléments de différents contenus à différentes positions, et en inversant l'insert de moule, une position du joint gravé du côté de l'insert de moule est changée, et dans la position changée, le joint gravé du côté de l'insert de moule est connecté à un élément du joint gravé du côté du moule principal, et une information du type du boîtier externe (40) est montrée.

11. Appareil de fabrication d'une batterie d'accumulateurs qui comprend un boîtier externe (40) et un support de batterie (20) comportant une pluralité de cellules de batterie, comprenant :
un moule principal qui moule le boîtier externe (40) ; et
un insert de moule qui peut être inséré dans le moule principal, et présentant un profil pour une nervure qui se projette depuis une surface interne du boîtier externe (40) et est située dans une première position pour former une nervure latérale de boîtier,
dans lequel la première position est réglée de manière à ne pas interférer avec une deuxième position où est pourvue une projection latérale de support (28) qui se projette depuis la surface externe du support de batterie (20), et dans différents types de supports de batterie, les deuxièmes positions sont changées chacune à des positions différentes, et en changeant l'insert de moule, une première position est changée, et une deuxième position d'un support de batterie correspondant au boîtier externe (40) moulé par l'insert de moule n'interfère pas avec la première position, et la première position est réglée de telle sorte que la deuxième position du support de batterie ne correspondant pas au boîtier externe (40) interfère avec la première position.

12. Appareil de fabrication d'une batterie d'accumulateurs selon la revendication 11,
dans lequel l'insert de moule présente un profil pour un joint gravé du côté de l'insert de moule de manière à marquer le joint gravé du côté de l'insert de moule montrant de l'information de caractère relative à la première position à la périphérie de la nervure latérale de boîtier (48) sur la surface interne du boîtier externe (40).

13. Appareil de fabrication d'une batterie d'accumulateurs selon la revendication 12,
dans lequel le moule principal présente un profil pour un joint gravé du côté du moule principal pour marquer le joint gravé du côté du moule principal à une périphérie de l'insert de moule, et en retournant l'insert de moule, la position du joint gravé du côté de l'insert de moule est changée, et le joint gravé du côté du moule principal est connecté au joint gravé du côté de l'insert de moule, et une information du type du boîtier externe (40) est montrée.

14. Appareil de fabrication d'une batterie d'accumulateurs selon la revendication 13,
dans lequel le joint gravé du côté du moule principal comprend plusieurs éléments de différents contenus à différentes positions, et en retournant l'insert de moule, une position du joint gravé du côté de l'insert de moule est changée, et dans la position changée, le joint gravé du côté de l'insert de moule est connecté à un élément du joint gravé du côté du moule principal, et une information du type du boîtier externe (40) est montrée.

15. Procédé de fabrication d'une batterie d'accumulateurs qui comprend un boîtier externe (40) et un support de batterie (20) contenant une pluralité de cellules de batterie, comprenant :
la sélection et l'insertion d'un insert de moule pour pouvoir être inséré dans un moule principal qui moule le boîtier externe (40) ;
la formation d'une nervure latérale de boîtier (48) qui se projette depuis la surface interne du boîtier externe (40) et est située dans une première position par le moule principal dans lequel l'insert de moule est inséré au moment du moulage du boîtier externe (40) ;
la formation d'une projection latérale de support (28) qui se projette depuis la surface externe du support de batterie (20) à une deuxième position au moment du moulage du support de batterie (20) pour pouvoir être stocké dans le boîtier externe (40) ; et
le stockage du support de batterie (20) dans le boîtier externe (40),
dans lequel la première position est réglée de telle sorte que la deuxième position du support de batterie (20) interfère avec la première position,
dans lequel, dans différents types de supports de batterie, les deuxièmes positions sont changées chacune à des positions différentes, et en changeant l'insert de moule, une première position est changée, et une deuxième position d'un support de batterie correspondant au boîtier externe (40) moulé par l'insert de moule n'interfère pas avec la première position, et la première position est réglée de telle sorte que la deuxième position du support de batterie ne correspondant pas au boîtier externe (40) interfère avec la première position.
